# EUROPÄISCHE PATENTANMELDUNG

(11) **EP 0 903 132 A1**
(43) Veröffentlichungstag der Anmeldung: **24.03.1999**
(21) Anmeldenummer: 97116447.0
(22) Anmeldetag: 22.09.1997
(51) Int. Cl.: A61F 9/00, G02C 7/12

(54) **Farbbrille**

(71) Anmelder: Maurer, Andreas, CH-8046 Zürich (CH)
(72) Erfinder: Maurer, Andreas, 8046 Zürich (CH); Mosetti, Pascal, 5702 Niederlenz (CH)
(74) Vertreter: Troesch Scheidegger Werner AG

(57) **Zusammenfassung**

Für das Durchführen insbesondere von Farblichttherapien resp. für das Anregen und Stimulieren im Bereich Freizeit und Sport eignet sich eine Farbbrille, aufweisend eine Lichtpolarisationsvorrichtung mit Polarisationsfiltern, mittels welchen weitgehendst das gesamte Farbspektrum des Lichtes einstellbar ist.

## Beschreibung

Die vorliegende Erfindung betrifft eine Farbbrille gemäss dem Oberbegriff nach Anspruch 1 sowie eine Verwendung der Farbbrille als Farblichttherapiebrille und als Anregungs- bzw. Stimulierungsbrille im Bereich Freizeit und Sport.

Die Kraft der Farbe ist Teil der natürlichen Energien des Universums. Das Heilen mit Farben war schon im alten Ägypten und Griechenland, in China, Indien und Tibet bekannt und praktiziert. Auch im überlieferten Wissen der Maya-Kultur in Zentralamerika und der nordamerikanischen Indianerstämme hat es seinen festen Platz. Das Wissen um die Farben und ihre Bedeutung fand in der griechischen Philosophie des klassischen Altertums, in der Lehre vom Pythagoras oder Plato etwa seinen Niederschlag, bevor es dann für Jahrhunderte beinahe ganz verschwand. Erst mit den farbtheoretischen Werkten von Newton, Goethe und anderen setzte erneut eine theoretische Auseinandersetzung mit den Eigenschaften von Farben, Farbe und Licht ein. Die heutigen therapeutischen Anwendungen von Farblicht bedeuten eine wertvolle Ergänzung zum natürlichen Heilen. Das Interesse für diesen Bereich, vor allem in den europäischen Ländern, gewinnt, insbesondere auch im Freizeit- und Sport-Bereich, zunehmend an Bedeutung, sogar im medizinischen Bereich. Die Behandlungsformen reichen von einfachen Therapien bis zum spezialisierten Einsatz von farbigen Formen wie Kristallen, Ölen und vor allem Licht. Als Energie wirkt auf allen Ebenen unseres Seins, auch der geistigen, emotionalen, körperlichen und seelischen Ebene. Licht ist elektromagnetische Strahlung, also Energie. Die Augen übersetzen die Energie des Lichtes in Signale, Nervenimpulse, die das Gehirn dann auswertet: dieser Vorgang wird als Sehen bezeichnet. Das sichtbare Licht setzt sich aus jenen Farben zusammen, die von uns vom Regenbogen her bekannt sind. Es stellt nur einen Teil des gesamten, von der Sonne ausgehenden Spektrums dar, das uns umgibt. Licht und Farbe haben sowohl auf den Körper wie auch auf den Geist eine starke Wirkung, ob bewusst oder nicht. Die Menschen reagieren physisch, mental und emotional auf das Wechselspiel der Farben.

### Einige Beispiele sind

- Physische (körperliche) Reaktionen auf Farben: Als Grundregel gilt, der rote Bereich des Spektrums erzeugt Spannung im Körper. Im Gegensatz dazu wirkt der blaue Bereich eher entspannend. Die Bestrahlung mit rotem Licht wirkt blutdrucksteigernd, wahrend blaues Licht diesen eher senkt.
- Mentale Reaktionen auf Farben: Farbe verändert die Wahrnehmung, so wirkt beispielsweise ein roter Raum kleiner als ein blauer.
- Emotionale Reaktionen auf Farben: Farben beeinflussen die Gefühle des Betrachters, und zwar je nach den körperlichen Empfindungen und den dazugehörigen psychischen Assoziationen. So wirkt zum Beispiel rot erregend, wogegen blau besänftigt.

Die dem breiten Publikum zugängliche Literatur über das gesamte Wirkungsspektrum der verschiedensten Farben und Farbkombinationen bestätigt das intensive Interesse in die alternativen Heilmethoden und spezifisch in die Farblichttherapie als wirkungsvolle Heilmethode.

### Das Licht und die Steuersysteme des Körpers

Die auf das Auge auftreffenden Lichtwellen lösen auf der Netzhaut Nervenimpulse aus, die als codierte Botschaft über den Sehnerv zum Sehzentrum in der hinteren Grosshirnwende geleitet werden. Einige der Impulse stimulieren auf ihrem Weg auch den Hypotalamus, Sitz der biologischen Uhr des Körpers und Zentrum der Steuerung des Schlaf-Wach-Rhythmus, der Nahrungsaufnahme und anderer wichtiger Funktionen wie Körperwärme und Wasserhaushalt. Der Hypotalamus beeinflusst die Hirnanhangdrüse und die Zirbeldrüse. Diese Drüsen erhalten auch von sämtlichen Zellen des Körpers Rückmeldungen bezüglich der Menge und Farbqualität des auf den Körper auftreffenden Lichtes. Diese Drüsen steuern die Funktionen des Körpers, indem sie Hormone produzieren, die selbst wiederum andere Drüsen stimulieren, wie die Nebennieren und die Geschlechtsdrüsen, und den Stoffwechsel des Körpers regulieren.

Für das Durchführen von Farbtherapien werden heute in der Regel spezielle Lampen verwendet, welche entweder mit farbigen Glühbirnen versehen sind, oder bei welchen Licht durch farbige Folien beispielsweise auf die Haut des menschlichen Körpers gestrahlt wird. Oder aber es werden ganze Räume mittels entsprechenden Lichtquellen beleuchtet, welche entweder farbig sind, oder wo wiederum Licht durch farbige Folien bzw. Gläser hindurch projiziert wird. Auch sind spezielle Scheinwerfer aus Diskotheken bekannt, bei welchen mittels dem Anordnen von speziellen Farbfiltern praktisch die ganze Farbpalette erzeugt werden kann. Bei all diesen speziellen Lichtquellen bzw. Vorrichtungen zum Erzeugen der diversen Farben und Farbpaletten besteht der gewichtige Nachteil, dass entweder ein Farbwechsel relativ umständlich ist, oder aber, wie beispielsweise bei Scheinwerfern, immer eine ganze Gruppe von Menschen derselben Farbe ausgesetzt sind, womit ein individuelles Farbempfinden verunmöglicht wird.

Die Aufgabe der vorliegenden Erfindung besteht deshalb darin, eine Vorrichtung zu schaffen, mittels welcher auf einfachste Art und Weise praktisch stufenlos jede Farbnuance schnell einstellbar ist und insbesondere jede Farbnuance individuell auf jeden Menschen einzeln eingestellt werden kann.

Erfindungsgemäss wird die gestellte Aufgabe mittels einer Farbbrille gemäss dem Wortlaut insbesondere nach Anspruch 1 gelöst.

Die Erfindung ist gekennzeichnet durch eine Lichtpolarisationsvorrichtung in Form einer Farb-Brille. Diese Brille ermöglicht durch die Kombination von Polarisationsfiltern die direkte "Einstellung" des gesamten Farbspektrums aus dem Licht. Dies ermöglicht in Form einer einzigen Produktlösung die Applikation des gesamten Farbspektrums und der verschiedensten, nach individuellen Bedürfnissen eingestellten Farbnuancen, Intensitäten und Kombinationen. Die Wirkung des gesamten Farbspektrums ist somit mit einer Produktlösung, einer einfachen Selbstanwendung und zu einem vernünftigen Kosten/Leistungsverhältnis möglich. Die Limitation der bestehenden Lösungen auf dem Markt in Form von Brillen, also die Wirkungsweise von Farben über das Auge, steht in der Erhältlichkeit von nur einzelnen Farbbrillen in einem limitierten Farbspektrum.

Die Farblichtbrille, im weiteren Brille genannt, soll dazu dienen, eine gewünschte, beliebige Farbe aus vorhandenem Licht (Tages- oder Kunstlicht) herauszufiltern, beziehungsweise die unerwünschten Farben zurückzuhalten. Die von der Brille noch durchgelassene Farbe oder Farbmischung soll laut diversen Studien je nach Farbe, Intensität und Einwirkdauer eine bestimmte Wirkung wie beispielsweise auf das Wohlbefinden eines Menschen erzeugen. Die Brille stellt ein möglicher Träger der verwendeten Technik zur Filtrierung von Licht dar. Die Technik basiert auf der Verwendung von Neutralpolarisationsfilter in Kombination mit Farbpolarisationsfilter, wie dies beispielsweise aus der internationalen Patentanmeldung WO94/28445 bekannt ist. Hinter oder vor den Neutralpolarisationsfilter werden Farbpolarisationsfilter gestellt und so angeordnet, dass sie gegenüber dem Neutralfilter verdreht werden können. D.h. die Polarisationsachse gegenüber der entsprechenden Achse des Neutralfilters muss verstellbar sein. Jeder einzelne Farbpolarisationsfilter wirkt nur in einem bestimmten Spektrum des Lichtes. So wird dieses Spektrum zur Winkeldifferenz (Neutral- zu Farbfilter), bei 0° das ganze Licht und bei 90° nur das restliche Spektrum des entsprechenden Farbfilters durchgelassen. Bei der Kombination des Neutralfilters mit mehreren unterschiedlichen Farbfiltern kann man so praktisch jede beliebige Farbe aus dem Spektrum des ursprünglichen Lichtes herausfiltern. Diese Technik könnte man z.B. auch auf Fenster, mit der selben Wirkung anwenden, um so Räume in einem bestimmten Licht erscheinen zu lassen.

Die Erfindung wird nun beispielsweise und unter Bezug auf die beigefügten Figuren näher erläutert. Dabei zeigen:
- Fig. 1:: schematisch eine erfindungsgemässe Farbbrille im zusammengesetzten Zustand und
- Fig. 2:: die erfindungsgemässe Brille aus Fig. 1 im auseinandergezogenen Zustand, insbesondere zeigend die diversen, hintereinander angeordneten Farbfilter.

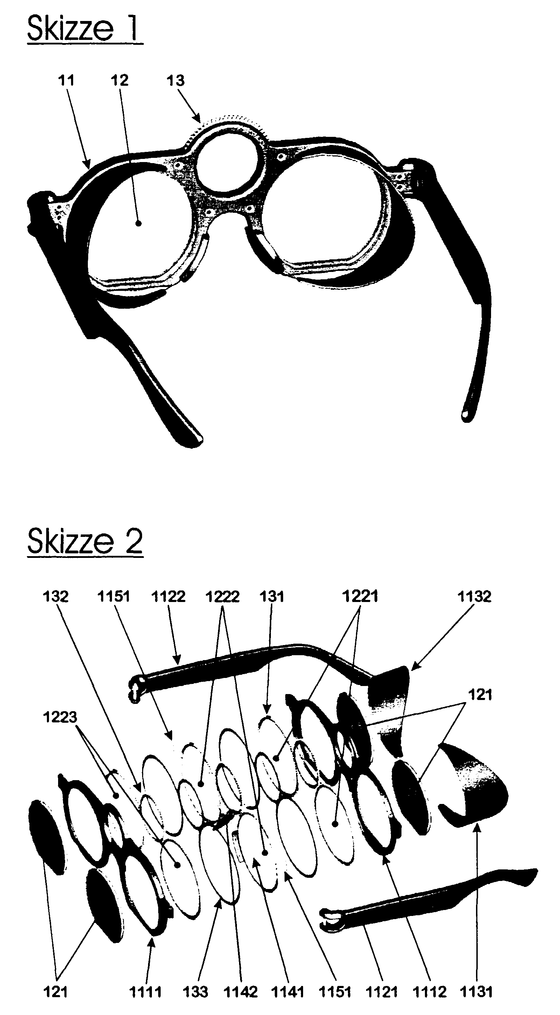

Das Gestell **11** dient wie bei jeder Brille zur Aufnahme und Plazierung der Gläser respektive der Filter und des Drehmechanismus, wie in unserem Fall. Der Träger **111** ist das Hauptteil zur Aufnahme aller anderen Teile. Die vordere Hälfte **1111** des Trägers **111** hat auf der linken, unteren Seite eine Öffnung, so dass das Rad des vorderen Farbfilters **1311** zum Vorschein kommt, um den Filter damit verstellen zu können. Über das entsprechende Ritzel wird der entsprechende Filter auf der anderen Seite im gleichen Drehsinn um den gleichen Winkel verdreht. Die hintere Hälfte **1112** des Trägers hat auf der rechten, unteren Seite eine Öffnung, so dass das Rad des hinteren Farbfilters zum Vorschein kommt, um den Filter damit verstellen zu können. Über das entsprechende Ritzel wird der entsprechende Filter auf der anderen Seite im gleichen Drehsinn um den gleichen Winkel verdreht. Die Bügel **112** haben die gleiche Funktion wie bei jeder Brille und können dementsprechend unterschiedlich gestaltet werden. Die Blenden **113** sollen verhindern, dass Störlicht seitlich oder von Hinten in die Augen gelangen. Es soll nur Licht welches die Filter passiert hat ins Auge gelangen um so den grösstmöglichen Nutzen zu erhalten. Die Blenden sollten aus weichem Material wie Gummi oder Leder gefertigt sein um sich optimal der Kopfform anzupassen und beim zuklappen der Bügel nachgeben zu können. Die Pads **114** bilden die Auflage der Brille für die Nase. Sie sollten aus einem weichen Material bestehen, wie z.B. Gummi. Diese Pads werden in unserem Fall (als eine mögliche Variante) formschlüssig zwischen den Trägerteilen eingesetzt. Die Verbindungselemente 115 (als mögliche Variante: Nieten) dienen dazu die Trägerteile und somit den ganzen Mechanismus zusammenzuhalten. An Stelle von Nieten **1151** könnte auch eine andere Verbindungstechnik angewendet werden. Die Gläser **12** setzen sich aus einer Kombination von verschiedenen Filtern zusammen. Die Neutralfilter **121** sind Polarisationsfilter mit einem ausgeprägten Wirkbereich im ganzen sichtbaren Wellenlängenbereich. Der Neutralfilter ist die Grundlage für das herausfiltern einer bestimmten Farbe aus dem Ausgangslicht (normalerweise Tageslicht). Dieser Filter muss nicht zwingenderweise verdrehbar montiert werden und wird im Beispiel Brille daher mit dem Träger fest verbunden. Die Polarisationsachse kann dabei beliebig liegen. Die linke und die rechte Seite muss auch nicht achsparallel zueinander sein. Für den Einsatz in der Farblichttherapie sollte dies jedoch der Fall sein, da sonst beim betrachten gewisser Gegenstände das linke und das rechte Auge unterschiedliche Darstellungen erhält, was zu Irritationen führen kann. Für andere Anwendungen kann jedoch genau dieser Effekt von Bedeutung sein. Die Farbfilter **122** sind Polarisationsfilter mit einem ausgeprägten Wirkbereich in einem bestimmten Wellenlängenbereich. Die Farbfilter werden so montiert, dass sie sich gegenüber den Neutralfiltern verdrehen lassen. Die Verdrehung bewirkt (zusammen mit dem Neutralfilter) eine Filterwirkung des Lichtes in einem bestimmten Wellenlängenbereich oder in bestimmten Bereichen. Der Verdrehwinkel der Polarisationsachen gegenüber den Polarisationsachsen des Neutralfilters ist von Bedeutung und muss für die linke und die rechte Seite gleich sein um den selben Farbeffekt auf beiden Seiten zu erhalten. Jeder der einzelnen hintereinandergeschalteter Farbfilter filtert einen eigenen Wellenlängenbereich des Lichtes heraus, so dass am Schluss ein Bereich oder Bereiche übrigbleiben, dem eine bestimmte Farbe oder Farbmischung entspricht. Der Gelbfilter **1221** ist ein Polarisationsfilter, welcher eine ausgeprägte Wirkung im gelben Lichtspektrum aufweist. Die restlichen Wellenlängenbereiche werden ungehindert durch den Filter gelassen. Der Rotfilter **1222** ist ein Polarisationsfilter, welcher eine ausgeprägte Wirkung im roten Lichtspektrum aufweist. Die restlichen Wellenlängenbereiche werden ungehindert durch den Filter gelassen. Der Blaufilter **1223** ist ein Polarisationsfilter, welcher eine ausgeprägte Wirkung im blauen Lichtspektrum aufweist. Die restlichen Wellenlängenbereiche werden ungehindert durch den Filter gelassen. Das Deckglas **123** dient einerseits als Schutz der dahinterliegenden Filter, anderseits kann das Glas auch für Brillenträger durch geschliffene Gläser ersetzt werden. Es sollte keinerlei farbverändernde oder polarisierende Wirkung auf das einfallende Licht ausüben. Der Verstellmechanismus **13** dient zum verdrehen der Farbfilter gegenüber dem Neutralfilter. Die Verstellung der drei Filter ist örtlich voneinander getrennt, so dass erstens nicht versehentlich zwei Filter zugleich verstellt werden können und zweitens man sich besser merken kann wo welche Farbe zu verstellen ist. Die vorderen Filter werden am Rad links, vorne, unten verstellt, die mittleren Filter am Ritzel in der Mitte, oben und die hinteren Filter am Rad rechts, hinten, unten. Dies kann natürlich auch Spiegelverkehrt realisiert werden. Die Räder **131** dienen zur Aufnahme der Farbfilter und weisen eine Verzahnung auf, so dass sie mit dem entsprechenden Ritzel in Eingriff gebracht werden können. Es muss eine Verdrehbarkeit von mindesten 90° gewährleistet werden können, so dass die volle Polarisationswirkung zu Zuge kommt. In unserem Fall beinhaltet das Rad noch einen Anschlag, so dass genau 90° Verdrehung möglich sind. Dies erleichtert die Suche von Extremstellungen (0°, 90°). Zwischenstellungen sollten mit einer einfachen Skala auf den Verstellrädern sowie auf dem Verstellritzel markiert werden, so dass das Einstellen einer bestimmten Farbe vereinfacht wird. Das vordere Rad **1311** weist eine Rändelung an der Stelle auf an der das Rad aus dem Träger herausschaut. Dies erleichtert die Verstellung des Rades mittels Finger. Dazu kommt eine Skala um genaues Einstellen zu ermöglichen. Das mittlere Rad **1312** ist im Träger so untergebracht, dass es von aussen nicht betätigt werden kann. Die Betätigung erfolgt über das mittlere Ritzel. Das hintere Rad **1313** weist eine Rändelung an der Stelle auf an der das Rad aus dem Träger herausschaut. Dies erleichtert die Verstellung des Rades mittels Finger. Dazu kommt eine Skala um genaues Einstellen zu ermöglichen. Das Ritzel **132** dient dazu um entsprechenden Farbfilter der linken und der rechten Seite im gleichen Drehsinn um den gleichen Winkel verstellen zu können. Dazu wird eine einfache Verzahnung verwendet. Das vordere Ritzel **1321** ist so im Träger versenkt, dass es nicht versehentlich zusammen mit einem anderen Ritzel verstellt werden kann. Das mittlere Ritzel **1322** schaut aus dem Träger heraus, so dass es mit dem Finger einfach zu betätigen ist. Dazu kommt eine Skala um genaues Einstellen zu ermöglichen. Das hintere Ritzel **1323** ist so im Träger versenkt, dass es nicht versehentlich zusammen mit einem anderen Ritzel verstellt werden kann. Die Zwischenfolie **133** verhindert beim drehen eines Filters das unkontrollierte verdrehen benachbarter Filter. Dazu kann sie auch noch als Staubdichtung zwischen den Filtern ausgelegt werden.

Bei der vorab unter Bezug auf die beigefügten Figuren beschriebenen Brille handelt es sich selbstverständlich nur um eine mögliche Ausführungsvariante einer erfindungsgemässen Farbbrille, welche auf x-beliebige Art und Weise abgeändert, modifiziert oder durch weitere Elemente ergänzt werden kann. Wesentlich ist, dass die Farbbrille eine Lichtpolarisationsvorrichtung enthält mit Polarisationsfiltern oder mit anderen geeigneten optischen Filtern, wie beispielsweise sogenannten LCD's, mittels welchen wenigstens ein Teil des Farbspektrums des Lichtes insbesondere im sichtbaren Bereich einstellbar ist. Eine derartige Brille eignet sich sowohl für das Durchführen von sogenannten Farbtherapien an einzelnen Patienten, wie auch für das Stimulieren von Menschen, beispielsweise im Freizeit- und Sport-Bereich. So ist es denkbar, dass mittels dem Einstellen bestimmter Farben an der Farbbrille bei der Trägerperson spezifische Stimmungszustände erzeugbar sind, sei dies ein besonders erregter, spannungsgeladener Zustand, um eine spezielle sportliche Leistung zu erbringen, oder aber ein entspannter Zustand, um beispielsweise besondere Eindrücke speziell geniessen zu können. Auch für das Erzeugen von meditativen Zuständen ist der Gebrauch der erfindungsgemäss vorgeschlagenen Farbbrille denkbar.

Auch in der Medienwelt kann die erfindungsgemäss vorgeschlagene Brille Verwendung finden, beispielsweise im Zusammenhang mit dem Erzeugen von speziellen Farbeffekten oder aber im Zusammenhang mit den neuartigen 3D-Projektionen, welche je nach in der Brille eingestellter Farbnuance unterschiedliche plastische Effekte bzw. Eindrücke beim Betrachten erzeugen können. Gedacht sei hier beispielsweise an die neuartigen Grossleinwandprojektionen in sogenannten 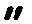 IMAX"-Kinos.

Die erfindungsgemäss vorgeschlagene Farbbrille kann auch in Kombination mit einem sogenannten UVA- oder UVB-Schutz hergestellt werden, indem die Schutzfaktoren beispielsweise direkt in den erfindungsgemäss vorgeschlagenen Filtern eingebaut werden. Selbstverständlich ist auch das Anbringen zusätzlicher Filter möglich, wie auch die Verwendung von geschliffenen Gläsern, damit Brillenträger beim Tragen der erfindungsgemässen Farbbrille scharf sehen können.

Gemäss einer weiteren Ausführungsvariante ist es möglich, die Gläser auswechselbar anzuordnen, damit unterschiedliche Farbfilter verwendet werden können. Als Grundeinstellung ergeben sich wohl die unter Bezug auf die Figuren erwähnten drei Grundfilter Gelb, Blau und Rot, doch sind selbstverständlich auch andere Grundfarben verwendbar, wie zum beispielsweise Rot, Blau und Grün oder Cyan, Magenta und Gelb, oder Rot, Gelb und Ultramarin etc.

Schlussendlich ist es auch möglich, die Farbbrille mit einem speziellen Spiegeleffekt zu versehen, wie er insbesondere bei sogenannten 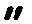 Fun"-Brillen in Sport und Freizeit Verwendung findet.

## Patentansprüche

1. Farbbrille, gekennzeichnet durch eine Lichtpolarisationsvorrichtung mit Polarisationsfiltern, mittels welchen wenigstens ein Teil des Farbspektrums des Lichtes einstellbar ist.

2. Farbbrille, insbesondere nach Anspruch 1, dadurch gekennzeichnet, dass neben mindestens einem Neutral-Polarisationsfilter (121) mindestens ein Farb-Polarisationsfilter (1221, 1222, 1223), vorzugsweise mindestens zwei Farb-Polarisationsfilter, angeordnet ist (sind).

3. Farbbrille, insbesondere nach einem der Ansprüche 1 oder 2, dadurch gekennzeichnet, dass der oder die Neutral-Filter Polarisationsfilter sind mit einem ausgeprägten Wirkbereich im ganzen sichtbaren Wellenbereich, und dass Farb-Filter und Neutral-Filter verdrehbar zueinander angeordnet sind.

4. Farbbrille, insbesondere nach einem der Ansprüche 1 bis 3, dadurch gekennzeichnet, dass pro Augenseite je eine Polarisationsvorrichtung vorgesehen ist, welche weitgehendst identisch aufgebaut sind.

5. Farbbrille, insbesondere nach Anspruch 4, dadurch gekennzeichnet, dass die beiden pro Augenseite vorgesehenen Polarisationsvorrichtungen derart miteinander gekoppelt sind, dass der Verdrehwinkel der Polarisationsachsen gegenüber den Polarisationsachsen des Neutral-Filters für die linke und rechte Seite der Brille gleich ist, um in beiden Brillengläsern denselben Farbeffekt zu erhalten.

6. Farbbrille, insbesondere nach einem der Ansprüche 1 bis 5, dadurch gekennzeichnet, dass die Polarisationsvorrichtung mindestens vier hintereinander angeordnete Filter umfasst, wobei neben einem Neutral-Filter mindestens drei Farbfilter angeordnet sind.

7. Farbbrille, insbesondere nach einem der Ansprüche 1 bis 6, dadurch gekennzeichnet, dass die Polarisationsvorrichtung mindestens drei Farbfilter für je eine Grundfarbe aufweist, welche in Kombination einen Teil oder weitgehendst den ganzen sichtbaren Farbspektrumsbereich ergeben, wie beispielsweise ein Gelb-, ein Rot- und ein Blaufilter als Polarisationsfilter.

8. Farbbrille, insbesondere nach einem der Ansprüche 5 bis 7, dadurch gekennzeichnet, dass mindestens die Farbfilter um mindestens 90° verdrehbar sind, damit die volle Polarisationswirkung zum Zuge kommt.

9. Verwendung der Farbbrille nach einem der Ansprüche 1 bis 8 als Farblichttherapie-Brille.

10. Verwendung der Farbbrille nach einem der Ansprüche 1 bis 8 als Anregungs- bzw. Stimulierungsbrille im Bereich Freizeit und Sport.
